# EUROPÄISCHE PATENTSCHRIFT

(11) **EP 3 253 992 B1**
(45) Veröffentlichungstag und Bekanntmachung des Hinweises auf die Patenterteilung: **05.01.2022**
(21) Anmeldenummer: 16702145.0
(22) Anmeldetag: 01.02.2016
(51) Int. Cl.: F16G 13/16

(54) **LEITUNGSFÜHRUNGSEINRICHTUNG MIT EINEM BEWEGUNGSSENSOR, SOWIE ANTRIEBSANORDNUNG UND WICKELVORRICHTUNG MIT EINER SOLCHEN LEITUNGSFÜHRUNGSEINRICHTUNG**
CABLING DEVICE HAVING A MOTION SENSOR, AND DRIVE ARRANGEMENT AND REEL APPARATUS HAVING SUCH A CABLING DEVICE
DISPOSITIF DE GUIDAGE DE LIGNES MUNI D'UN CAPTEUR DE MOUVEMENT, AINSI QUE SYSTÈME D'ENTRAÎNEMENT ET DISPOSITIF D'ENROULEMENT MUNI DUDIT DISPOSITIF DE GUIDAGE DE LIGNES

(30) Priorität: 02.02.2015 DE 202015100484 U
(43) Veröffentlichungstag der Anmeldung: 13.12.2017
(73) Patentinhaber: Igus GmbH, 51147 Köln (DE)
(72) Erfinder: HERMEY, Andreas, 53773 Hennef (DE); THEISS, Georg, 50678 Köln (DE); JAEKER, Thilo-Alexander, 53757 Sankt Augustin (DE); HOWOLD, Philip, 50226 Frechen (DE)
(74) Vertreter: Lippert Stachow Patentanwälte Rechtsanwälte
(86) Internationale Anmeldenummer: PCT/EP2016/052074
(87) Internationale Veröffentlichungsnummer: WO 2016/124546

(56) Entgegenhaltungen:
- DE-U1-202011 107 804
- DE-U1-202014 100 540
- US-A- 6 057 682

## Beschreibung

Die Erfindung betrifft allgemein eine Leitungsführungseinrichtung, insbesondere eine Energieführungskette, mit einem Bewegungssensor. Die Erfindung betrifft auch eine Anordnung zur Leitungsführung umfassend einen Antrieb zur Unterstützung der Hin- und/oder Rückfahrbewegung der Leitungsführungseinrichtung, eine Steuereinheit zum Ansteuern des Antriebs und eine Sensoreinheit zur Erfassung einer Bewegungsgröße der Leitungsführungseinrichtung. Die Erfindung betrifft ferner eine Vorrichtung zum Auf- und Abwickeln einer gattungsgemäßen Leitungsführungseinrichtung und deren Verwendung zur Landstromversorgung (Engl. Shore Power / Alternative Maritime Power), oder auch zur Versorgung eines Tiefbauwerkzeugs. Leitungsführungseinrichtungen, z.B. einer Energieführungskette, sind allgemein bekannt und dienen zur geschützten Führung von Leitungen, Kabeln, Schläuchen oder dgl. zwischen einer ersten Anschlussstelle und einer zu dieser relativbeweglichen zweiten Anschlussstelle an einem Verbraucher wie bspw. einem beweglichen Maschinenteil. Es ist ebenfalls bekannt, Energieführungsketten mit bestimmter Sensortechnik auszurüsten. So beschreiben z.B. die DE 20 2014 100540 U1 und Q die Patentanmeldung WO 2009/095470 A1 einen Kraftmesssensor an einem besonders ausgeführten Mitnehmer und eine Einheit zur Überwachung der auf die Energieführungskette ausgeübten Zug- und Schubkräfte, um ggf. einen Kettenbruch zu vermeiden. Zur Ansteuerung eines Antriebs für eine selbsttätige Bewegung der Energieführungskette ist diese Sensortechnik allerdings nicht unmittelbar geeignet bzw. recht aufwendig.

Die Patentanmeldung WO 2014/102170 A1 beschreibt eine besondere Anordnung zur Leitungsführung umfassend eine solche Energieführungskette und einen Antrieb welcher mit der Energieführungskette wirkverbunden ist zur Unterstützung der Hin- und/oder Rückfahrbewegung der Energieführungskette. Zum Ansteuern des Antriebs wird eine Steuereinheit vorgeschlagen, welche mit einer Sensoreinheit zur Erfassung einer Bewegungsgröße am beweglichen Endbereich der Energieführungskette signaltechnisch verbunden ist. Die WO 2014/102170 A1 beschreibt in diesem Zusammenhang, insbesondere mit Bezug auf deren Fig. 11, eine Energieführungskette mit einer Kopplungseinrichtung, die mit einem ersten Mitnehmer an einem Maschinenteil verbunden ist. Die Kopplungseinrichtung hat wenigstens einen Sensor, z.B. einen Wegsensor. Die Kopplungseinrichtung ist mit einem zweiten Mitnehmer an der eigentlichen Energieführungskette verbunden. Die Kopplungseinrichtung kann als Bewegungspuffer einen Abschnitt einer weiteren Energieführung aufweisen. Der erste Mitnehmer ist in Längsrichtung relativ zum zweiten Mitnehmer hin und her verfahrbar. In Abhängigkeit vom relativen Verfahrweg des ersten Mitnehmers liefert der Wegsensor ein Signal an eine Steuerung. Die Steuerung aktiviert oder deaktiviert eine Antriebseinrichtung zum Unterstützen des beweglichen Trums der Energieführungskette.

Die Bauweise dieser Kopplungseinrichtung mit Wegsensor ist ebenfalls aufwendig, zudem relativ groß und nicht für alle Anwendungsfälle geeignet.

Eine mögliche Anwendung einer antriebsgestützten Leitungsführungseinrichtung ist aus der Patentanmeldung DE 10 2012 110 967 A1 bekannt. Hier wird eine Vorrichtung zum Auf- und Abwickeln einer Energieführungskette, beschrieben mit einer drehbar gelagerten Trommel zum Auf- und Abwickeln der Leitungsführungseinrichtung und mit einem Trommelantrieb zum Drehen der Trommel. Durch den motorischen Trommelantrieb wird die Energieführungskette in und gegen die Abwicklungsrichtung von bzw. auf die Trommel gespult. Wie der Trommelantrieb zu steuern ist, lässt die DE 10 2012 110 967 A1 jedoch offen.

Ein Tiefbauwerkzeug mit einer Vorrichtung zum Auf- und Abwickeln einer Leitungsführungseinrichtung, deren Auf- und Abwickeln nicht motorgestützt ist, wird in der Patentanmeldung EP 0 518 292 A1 beschrieben. Im Vergleich zu der dort vorgeschlagenen aufwendigen Bauweise der Leitungsführung könnte eine mit einem Antrieb unterstützte Leitungsführung auf deutlich geringere Zug- und Schubbelastung ausgelegt werden und damit deutlich vereinfacht werden.

Ausgehend vom vorgenannten Stand der Technik liegt eine erste Aufgabe der Erfindung darin, eine einfache, kompakte und robuste Bauweise eines Bewegungssensors zur Erfassung einer Bewegungsgröße einer Leitungsführungseinrichtung, sowie eine damit ausgerüstete Leitungsführungsanordnung vorzuschlagen. Letztere soll insbesondere sowohl für vertikale als auch für horizontale Anwendungen geeignet sein. Dies wird mit den Merkmalen aus Anspruch 1 erreicht.

Eine zweite ggf. unabhängige Aufgabe liegt darin, eine Vorrichtung zum Auf- und Abwickeln einer Leitungsführungseinrichtung mit einer einfachen Ansteuerung auszurüsten, welche insbesondere zur Verwendung mit schweren Leitungen, z.B. in der Landstromversorgung von Schiffen oder aber zur Verwendung in Tiefbaumaschinen geeignet ist. Dies wird mit den Merkmalen aus Anspruch 10, oder durch Anspruch 14 bzw. Anspruch 15 erreicht.

Die erste Aufgabe kann in einer besonders einfachen Ausführungsform dadurch gelöst werden, dass bei einer einen Bewegungssensor umfassenden Leitungsführungseinrichtung zur geschützten Führung von Leitungen, Kabeln, Schläuchen oder dergleichen zwischen einer ersten Anschlussstelle und einer dazu relativbeweglichen zweiten Anschlussstelle, und dass der Bewegungssensor ein Lager mit einem ersten Bauteil und mit einem dazu relativbeweglichen zweiten Bauteil aufweist, und mindestens einen Aufnehmer umfasst, dessen Ausgangssignal von der Relativposition des zweiten Bauteils in Bezug auf das erste Bauteil abhängt. Je nach Ausführung des Bewegungssensors kann das erste Bauteil an der zweiten Anschlussstelle und das zweite Bauteil am entsprechenden beweglichen Ende der Leitungsführungseinrichtung befestigt werden, oder umgekehrt.

Das Lager kann insbesondere als Linearlager ausgeführt sein, d.h. der Bewegungssensor umfasst eine Führung, ein in der Führung längsverschiebbares Gleitstück {Englisch: slider} und mindestens einen Aufnehmer, dessen Ausgangssignal von der Position des Gleitstücks relativ zur Führung abhängt. Der Bewegungssensor kann so ausgeführt sein, dass die Führung an der zweiten Anschlussstelle befestigbar ist und das Gleitstück am damit zu verbindenden, beweglichen Ende der Leitungsführungseinrichtung befestigbar ist. Auch die mechanisch äquivalente umgekehrte Ausführung liegt Rahmen der Erfindung, d.h. mit dem Gleitstück am Mitnehmer zu befestigen bzw. in diesen zu integrieren und mit der Führung am beweglichen Endbereich der Leitungsführungseinrichtung zu befestigten.

Das Lager kann auch als Drehlager bzw. Radiallager ausgeführt sein, beispielsweise mit einem am ersten Bauteil drehbar gelagerten Schwenkarm, dessen Drehstellung die Bewegungsrichtung anzeigt. Bei einem Bewegungssensor mit einem Drehlager zur Positionsbestimmung kann unter Verwendung eines herkömmlichen Potentiometers bereits eine präzise Regelung der Relativposition bzw. der Bewegung des beweglichen Endbereichs erzielt werden.

Die Führung kann eine verschiebliche und schwimmende Lagerung, insbesondere eine Gleitlagerung, des Gleitstücks bilden und diese in den beiden dazu senkrechten Richtungen im Wesentlichen spielfrei lagern. Die Längsrichtung kann insbesondere der Verfahrrichtung der zweiten Anschlussstelle bzw. des beweglichen Endes der Leitungsführungseinrichtung entsprechen, welche typisch mit der Längserstreckung dieses Endbereichs der Leitungsführungseinrichtung zusammenfällt.

Als Bewegungssensor wird vorliegend jede Vorrichtung verstanden, welche eine räumliche Bewegung bzw. Positionsänderung in eine elektromagnetische Größe umsetzt, die mit einer geeigneten Schaltung ausgewertet werden kann. Als Bewegungsgröße wird insbesondere die Richtung und/oder das Ausmaß einer räumlichen Positionsänderung verstanden.

In einer mechanisch einfachen Ausführung ist der mindestens eine Aufnehmer am Gleitstück oder an der Führung oder, bei einer mehrteiligen Bauweise ggf. an beiden angebracht.

Eine messtechnisch besonders einfache Ausführungsform umfasst mindestens oder genau zwei Aufnehmer, wovon jeweils nur einer bei Näherung an eine von zwei Endpositionen in Längsrichtung anspricht. Dies kann besonders einfach durch einen ersten und einen zweiten berührungsfreien Näherungsschalter erzielt werden, welche mit einem Abstand in Längsrichtung vorgesehen sind. Auf diese Weise wird ein besonders einfacher Hysterese-Sensor realisiert, welcher nur die Bewegungsrichtung des beweglichen Endes der Kette anzeigt. Als geeignete Näherungsschalter kommen elektromagnetisch, wie z.B. induktive, kapazitive Aufnehmer oder magnetische Aufnehmer, wie z.B. ein Reedkontakt oder Hallsensor, in Betracht. Auch eine optische Bewegungserfassung liegt im Rahmen der Erfindung, z.B. mit Lichtschranken und einer diese unterbrechenden Positionsfahne. Komplexere Bewegungssensoren sind nicht erforderlich, kämen aber in Betracht, um eine präzisere Regelung zu erreichen, wenn z.B. neben der Richtungserkennung eine Angabe zur Geschwindigkeit gewünscht ist. Die Richtungserkennung kann ggf. auch mit einer Sensorkomponente realisiert werden, wenn diese zum Signalversatz drei geeignet angeordnete Hallelemente aufweist. Als Geber kann bei solchen Sensoren eine ferromagnetische Zahnstange, ein Stanzblech oder ein Geber mit in Längsrichtung alternierenden Magnetpolen dienen.

Die Leitungsführungseinrichtung bzw. der Bewegungssensor kann zusätzlich zu dem mindestens einen Aufnehmer zwei Endschalter an gegenüberliegenden Enden der Führung bzw. des Gleitstücks aufweisen, um das Erreichen einer maximalen Längsverschiebung anzuzeigen. So kann z.B. eine Überbelastung der Leitungsführungseinrichtung durch einen Nothalt des beweglichen Mitnehmers bzw. der zweiten Anschlussstelle realisiert werden. Bei besonders anfälligen bzw. anspruchsvollen Leitungsführungseinrichtungen kommt auch ein Abkoppeln der Leitungsführungseinrichtung von der zweiten Anschlussstelle in Betracht. In diesem Fall sollte das Gleitstück zerstörungsfrei aus der Führung heraus lösen, und die geführten Leitungen mit einer leicht trennbaren Verbindung angeschlossen sein.

Die vorgenannte Gestaltung stellt mit dem vorgeschlagenen Bewegungssensor ein einfaches und robustes Messglied bereit, welches mit einer Steuereinheit verbunden werden kann, um ein Stellglied anzusteuern, z.B. einen oder mehrere Motorantriebe zur Entlastung bzw. Unterstützung einer Energieführungskette wie in WO2014102170A1 beschrieben. Die Steuereinheit kann hierbei im Sinne der Regelungstechnik eine Regelung mit Rückkopplung oder ggf. auch eine einfache Steuerung bilden.

Vorteilhaft werden die Signalleitungen, z.B. zum Verbinden des Bewegungssensors mit einer Steuereinheit und/oder mit einem Stellglied, durch die Leitungsführungseinrichtung selbst geschützt zu deren feststehendem Ende geführt.

Die Steuerung, welche die Signale des Bewegungssensors auswertet, kann entweder am Festpunkt oder am beweglichen Verbraucher angeordnet sein. Letzteres ist insbesondere bei besonders langen zu führenden Leitungen vorteilhaft, da die Anzahl der von der zweiten zur ersten Anschlussstelle rückzuführenden Leitungen geringer ausfallen kann. Es kann z.B. eine einzige Datenleitung ausreichen, wenn Steuerungseinheit und/oder Bewegungssensor über ohnehin vorgesehen Versorgungsleitungen gespeist werden können. Eine Datenübertragung per Funk liegt auch im Rahmen der Erfindung.

Der Bewegungssensor kann mit einer Steuereinheit verbunden sein, welche einen Antrieb zur Unterstützung der Leitungsführungseinrichtung als Stellglied ansteuert. Die Steuerung löst vorzugsweise auch einen Nothalt des beweglichen Verbrauchers aus, welcher die zweite Anschlussstelle umfasst, wenn der Bewegungssensor das Erreichen einer maximal zulässigen Längsverschiebung zwischen Führung und Gleitstück anzeigt, z.B. durch geeignete Endschalter. Dies ist besonders vorteilhaft, wenn das bewegliche Ende der Leitungsführungseinrichtung vom Verbraucher zu Schutzzwecken abkoppelbar bzw. abtennbar ist.

Bevorzugt kann der Bewegungssensor den Verbraucher mit dem beweglichen Ende der Leitungsführungseinrichtung mechanisch koppeln, ähnlich wie ein Mitnehmer, jedoch mit Spiel bzw. schwimmend in Längsrichtung. Hierzu kann er insbesondere an der Führung bzw. am Gleitstück zwei Endanschläge aufweisen zur Begrenzung der maximalen Längsverschiebung und zur Kraftübertragung zwischen beiden Teilen.

Gemäß einem Aspekt betrifft die Erfindung eine Anordnung zur Leitungsführung mit einer gattungsgemäßen Energieführungskette, einem Antrieb, welcher die Energieführungskette bei ihrer Hin- und/oder Rückfahrbewegung unterstützt, eine Steuereinheit für den Antrieb sowie eine Sensoreinheit zur Erfassung einer Bewegungsgröße am beweglichen Endbereich der Energieführungskette. Dieser Aspekt der Erfindung zeichnet sich dadurch aus, dass die Sensoreinheit einen Bewegungssensor umfasst, mit einer Führung, einem in der Führung längsverschiebbaren Gleitstück und mindestens einem Aufnehmer, dessen Ausgangssignal von der Position des Gleitstücks relativ zur Führung abhängt. Der Bewegungssensor kann hierbei entweder mit der Führung ortsfest am Verbraucher und mit dem Gleitstück ortsfest am beweglichen Ende oder aber mit der Führung ortsfest am beweglichen Ende und mit dem Gleitstück ortsfest am Verbraucher ausgeführt sein.

In einer Ausführung dieser Anordnung zur Leitungsführung, erfolgt die Hin- und/oder Rückfahrbewegung der Energieführungskette im Wesentlichen in horizontaler Richtung, wobei die Energieführungskette ein Untertrum, einen Umlenkbogen und ein Obertrum bildet und der Antrieb die Fahrbewegung des Obertrums und/oder des Umlenkbogens unterstützt. Dies kann z.B. anhand von mehreren Motorantrieben in einer Gleitschiene oder anhand eines motorbetriebenen Laufbands oder dgl. erfolgen. Die Kette selbst kann auch mit einem oder mehreren Antrieben im Bereich des Obertrums ausgerüstet sein, welche dieses in der gewünschten Richtung antreiben. Ferner ist es denkbar, den Umlenkbogen in seiner Bewegung zu unterstützen, insbesondere, wenn bereits eine Umlenkrolle vorhanden ist, über welche die Energieführungskette umgelenkt wird.

Gemäß einem unabhängigen weiteren Aspekt, wird die zweite eingangs genannte Aufgabe gelöst durch eine Vorrichtung zum Auf- und Abwickeln einer Leitungsführungseinrichtung, insbesondere einer Energieführungskette, umfassend eine gattungsgemäße Leitungsführungseinrichtung, eine drehbar gelagerte Trommel zum Auf- und Abwickeln der Leitungsführungseinrichtung, und einen Trommelantrieb zum Drehen der Trommel. Dieser Aspekt kann sich dadurch auszeichnen, dass am verbraucherseitigen Endbereich der Leitungsführungseinrichtung eine Sensoreinheit zur Erfassung einer Bewegungsgröße der Leitungsführungseinrichtung angeordnet ist, und eine mit dieser Sensoreinheit und dem Trommelantrieb verbundene Steuereinheit zum Ansteuern des Trommelantriebs vorgesehen ist.

Mit dieser Anordnung lässt sich besonders einfach eine Reduzierung der typischen Zug- und Schubkräfte in Leitungsführungseinrichtungen allgemein und insbesondere in einer Energieführungskette erzielen. Unter Trommel wird auch eine Haspel oder jede ähnliche Vorrichtung verstanden, welche zum Auf- und Abwickeln einer Leitungsführungseinrichtung geeignet ist.

Die Vorrichtung zum Auf- und Abwickeln der Trommel kann insbesondere gemäß der Lehre aus DE102012110967A1 ausgeführt sein.

Besonders bevorzugt, aber nicht zwingend, wird umfasst die Sensoreinheit einen Bewegungssensor gemäß dem ersten vorgenannten Aspekt der Erfindung, d.h. mit einer Führung, einem in der Führung längsverschiebbaren Gleitstück und mindestens einem Aufnehmer, dessen Ausgangssignal von der Position des Gleitstücks relativ zur Führung abhängt.

Die Steuereinheit kann den Trommelantrieb in Bezug auf dessen Drehrichtung und dessen Drehzahl ansteuern, insbesondere so regeln, dass das freie, aus- bzw. einfahrbare Ende der Leitungsführungseinrichtung einer Bewegung des Verbrauchers im Wesentlichen synchron folgt.

In einfacher Ausführung umfasst der Trommelantrieb einen Elektromotor, z.B. einen frequenzgesteuerten Elektromotor wie eine Drehstrom-Asynchronmaschine.

Um ein ungewolltes Abwickeln bei Motorstillstand zu verhindern, umfasst der Trommelantrieb vorzugsweise ein antriebsseitig mit einem Motor verbundenes selbsthemmendes Getriebe, welches abtriebsseitig mit der Trommelachse bzw. -welle verbunden ist. Besonders geeignet ist Schneckengetriebe als selbsthemmendes Getriebe.

Gemäß einem weiteren Aspekt der Erfindung vereinfacht diese die Versorgung eines im Hafen festgemachten Schiffes. Durch Landstromversorgung kann u.a. vermieden werden, dass die Schiffsgeneratoren zur Stromerzeugung benötigt werden, d. h. eine Abgasreduzierung wird erreicht. Gemäß diesem weiteren Aspekt der Erfindung kann diese insbesondere bei der Landstromversorgung eines Hochseeschiffs verwendet werden. Die Leitungsführungseinrichtung hat dabei vorzugsweise eine auf- und abwickelbare Energieführungskette zum Führen der Starkstromkabel.

Die Erfindung betrifft schließlich auch die Verwendung der Vorrichtung nach dem vorletzten, zweiten Aspekt zur Versorgung und ggf. auch Entsorgung eines vertikal verfahrbaren Tiefbauwerkzeugs, wie beispielsweise eines Tiefbohrkopfes, eines Schneidkopfs für den Rückbau von Plattformpfeilern, einer Schlitzwandfräse gemäß EP0518292A1 oder dergleichen. Hierbei ist das die zweite Anschlussstelle aufweisende Tiefbauwerkzeug typischerweise von einem Zugseil einer Winde getragen und fährt mittels eines Windenantriebs überwiegend vertikal auf- bzw. ab. Aufgrund der hier vorgeschlagenen Sensoreinheit und der Steuereinheit kann der Trommelantrieb synchron oder quasi synchron dem Windenantrieb nachlaufen, ohne dass hierzu aufwendige Regelungstechnik erforderlich wäre.

Weitere Einzelheiten, Merkmale und Vorteile der Erfindung sind der nachfolgenden, ausführlicheren Beschreibung bevorzugter Ausführungsbeispiele anhand der beiliegenden Figuren zu entnehmen. Diese zeigen ohne Beschränkung in schematischer und nicht maßstabsgetreuer Darstellung:
- FIG.1:: eine schematische Seitenansicht einer ersten Ausführung eines Bewegungssensors gemäß dem ersten Aspekt der Erfindung;
- FIG.2:: eine schematische Seitenansicht einer zweiten Ausführung eines Bewegungssensors gemäß dem ersten Aspekt der Erfindung;
- FIG.3:: eine schematische Draufsicht auf ein Ausführungsbeispiel einer Vorrichtung zum Auf- und Abwickeln einer Leitungsführungseinrichtung gemäß dem zweiten Aspekt;
- FIG.4A-4C:: schematische Seitenansichten einer weiteren Vorrichtung zum Auf- und Abwickeln gemäß dem zweiten Aspekt, z.B. für die Verwendung an einem Tiefbauwerkzeug; und
- FIG.5:: eine schematische Ansicht der Verwendung einer Vorrichtung zum Auf- und Abwickeln einer Leitungsführungseinrichtung, z.B. nach FIG.3 oder FIG.4A-4C, zwecks Landstromversorgung eines Schiffs.

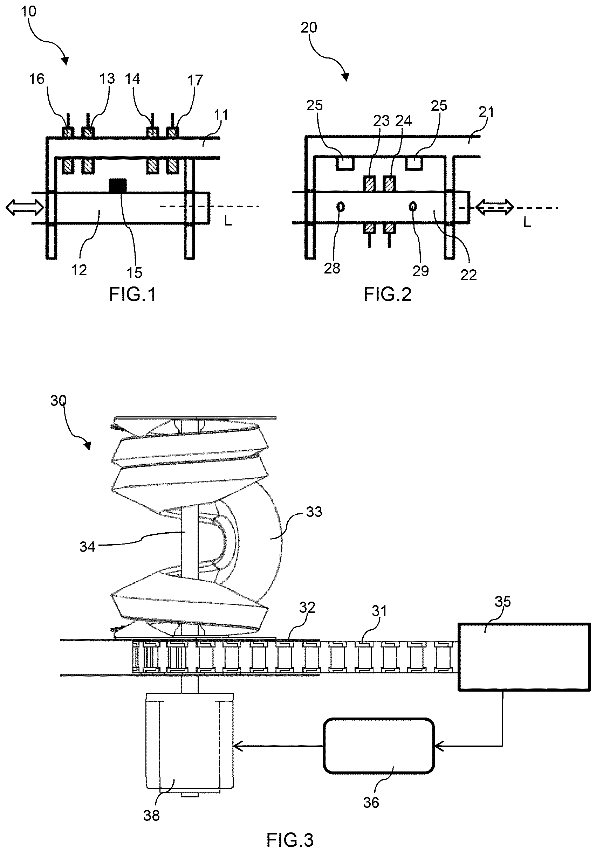

FIG.1 zeigt ein erstes Ausführungsbeispiel eines Bewegungssensors 10. In einer Führung 11 ist ein Gleitstück 12 in Längsrichtung L verschieblich gelagert, z.B. mittels Gleitlagern. Die Lager können in koaxialen Öffnungen an zwei gegenüberliegenden Haltearmen der Führung 11, die senkrecht zur Längsrichtung L liegen, vorgesehen werden, wie in FIG.1 angedeutet. In FIG.1 sind an der Führung 11 zwei Aufnehmer 13, 14 in vorbestimmten Längsabstand angebracht. Etwa mittig am Gleitstück 12 ist ein Auslöseelement 15, z.B. ein Permanentmagnet, angeordnet welches mit den Aufnehmern 13, 14 zusammenwirkt. Die Aufnehmer 13, 14 können so als berührungslöse Näherungsschalter, wie Reed-Kontakte oder dgl. ausgeführt sein.

Wenn ein an der Führung 11 befestigter Verbraucher sich entfernt wird das Gleitstück 12 relativ zur Führung 11 rückwärts bewegt (nach links in FIG.1), d.h. der erste Aufnehmer 13 wird dann ansprechen. Wenn sich das Gleitstück 12 relativ zur Führung vorwärts (nach rechts in FIG.1) bewegt, wird der zweite Aufnehmer 14 ansprechen. So kann robust und besonders einfach die Bewegungsrichtung erkannt werden, da das Ausgangssignal der Aufnehmer 13, 14 von der Relativposition des schwimmend gelagerten Gleitstücks 12 relativ zur Führung 11 abhängt. Es ist hierbei unerheblich, ob die Führung 11 an der verbraucherseitigen Anschlussstelle und das Gleitstück 12 am entsprechenden beweglichen Ende einer Leitungsführungseinrichtung (vgl. FIG.3-4) befestigt wird oder umgekehrt, lediglich das Verhalten der Aufnehmer 13, 14 wird sich dementsprechend umkehren.

FIG.1 zeigt neben den Aufnehmer 13, 14 zusätzlich zwei Endschalter 16, 17 an gegenüberliegenden Enden der Führung 11, gleich neben den Haltearmen. Die Endschalter 16, 17 wirken nach dem gleichen Prinzip wie die Aufnehmer, zeigen jedoch das Erreichen einer maximal gewünschten Längsverschiebung an, entsprechend welcher der Abstand zwischen den Endschaltern 16, 17 und damit der Bewegungssensor 10 zu dimensionieren ist.

FIG.2 zeigt ein zweites Ausführungsbeispiel eines Bewegungssensors 20, welcher sich im Wesentlichen nur in zwei Aspekten von FIG.1 unterscheidet. Die Aufnehmer 23, 24 zur Richtungserkennung sind hier nicht an der Führung 21, sondern am Gleitstück 22 angebracht. Dementsprechend sind an der Führung 21 an den Endbereichen zwei Auslöseelemente 15 vorgesehen. Die Wirkweise der Aufnehmer 23, 24 ist jedoch identisch wie die der Aufnehmer 13, 14. Ein weiterer Unterschied besteht darin, dass der Bewegungssensor 20 Endanschläge 28, 29 aufweisen, z.B. Querbolzen, welche an den Haltearmen angreifen. Die Endanschläge 28, 29 begrenzen die Relativbewegung des Gleitstücks 22 in Bezug auf die Führung 21 und sind ggf. hinreichend stark ausgeführt, um den Bewegungssensor 20 zugleich als Mitnehmer mit schwimmender Lagerung in Längsrichtung L zu verwenden.

FIG.3 zeigt eine Vorrichtung 30 zum horizontalen Auf- und Abwickeln einer Energieführungskette 31 zur geschützten Führung von Leitungen, Kabeln, Schläuchen oder dgl. (in FIG.3 nicht gezeigt). Die Vorrichtung 30 umfasst eine drehbar gelagerte Trommel 32 zum Auf- und Abwickeln der Energieführungskette 31 mit einem entsprechenden Trommelantrieb 38 zum Antreiben der Trommel. Zur Vermeidung von Schleifkontakten oder dgl. weist die Vorrichtung ein spezielles Spiralband 33 auf, welches das nicht ausfahrbare Ende der Energieführungskette 31 mit dem Festpunkt verbinden. Die Vorrichtung 30 ist insoweit im Wesentlichen gemäß DE 10 2012 110 967 A1 ausgeführt.

Zum Ansteuern und ggf. zur Regelung des Trommelantriebs 38 ist am aus- und einfahrbaren bzw. verbraucherseitigen Endbereich der Energieführungskette 31 eine Sensoreinheit 35 vorgesehen, welche einen Bewegungssensor 10 bzw. 20 gemäß FIG.1 oder FIG.2 umfasst zur Erfassung einer Bewegungsgröße, insbesondere der Bewegungsrichtung des Verbrauchers (nicht gezeigt in FIG.3). Eine mit der Sensoreinheit 35 und dem Trommelantrieb 38 jeweils signaltechnisch verbundene Steuereinheit 36 dient zum Ansteuern des Trommelantriebs 38 entsprechend der erfassten Bewegungsgröße.

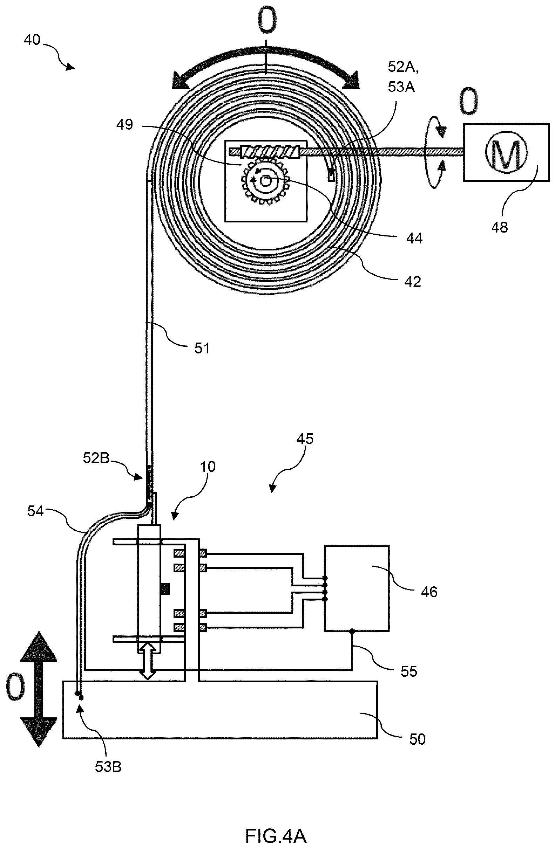

FIG.4A-4C zeigen eine Vorrichtung 40 zum vertikalen Auf- und Abwickeln einer Energieführungskette 51, zur geschützten Führung von Versorgungsleitungen 54, z.B. für ein Tiefbauwerkzeug, zwischen einer ersten Anschlussstelle 53A und einer zu dieser relativbeweglichen zweiten Anschlussstelle 53B an einem Verbraucher 50. Die Vorrichtung 40 ist nach einem ähnlichen Prinzip aufgebaut wie die Vorrichtung 30 aus FIG.3 und umfasst insbesondere eine Sensoreinheit 45 mit einem Bewegungssensor 10 gemäß FIG.1, wobei die Führung ortsfest am Verbraucher 50 und das Gleitstück am beweglichen Endbereich 52B der Energieführungskette 51 ortsfest angebracht ist. Die Anordnung kann auch umgekehrt sein.

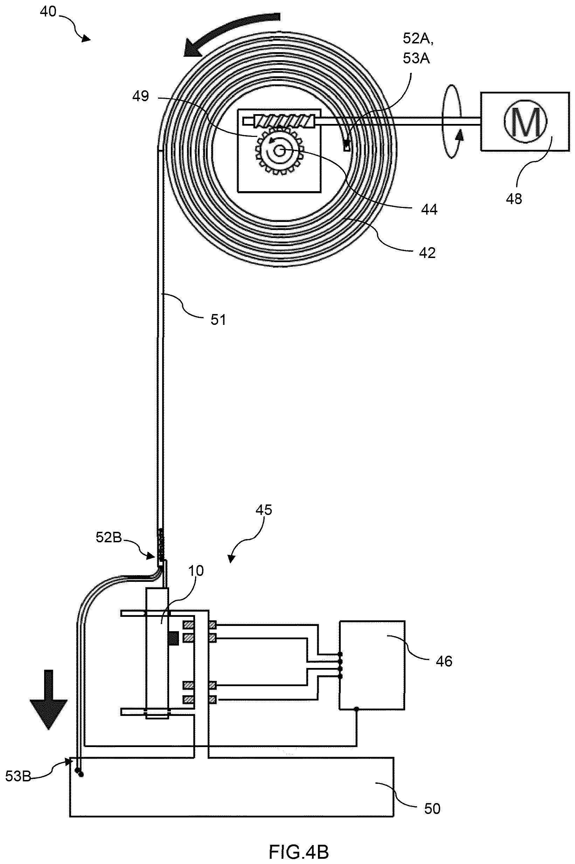

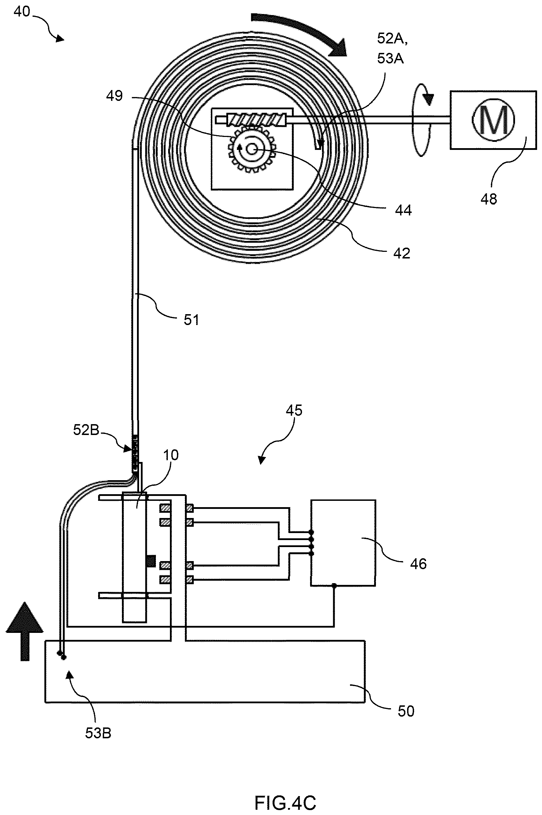

Die Vorrichtung 40 nach FIG.4A-4C hat einen Elektromotor 48 als Antrieb zur Unterstützung der Auf- und/oder Einfahrbewegung der Energieführungskette 51 bzw. zum Antreiben der drehbaren Trommel 42. Die Sensoreinheit 35 erfasst anhand des Bewegungssensors 10 die Bewegungsrichtung des Verbrauchers 50. Wie ein Vergleich der FIG.4B bzw. FIG.4C mit dem Ruhezustand in FIG.4A zeigt, wird der eine Aufnehmer 13 ansprechen wenn der Verbraucher 50 abwärts fährt und der andere Aufnehmer 14 ansprechen, wenn der Verbraucher 50 aufwärts fährt. Dementsprechend steuert die Steuereinheit 46 über die Signalleitung 55 den Trommelantrieb 48 an, um die Energieführungskette 31 aufzuwickeln (FIG.4C) oder abzuspulen (FIG.4B). Aufgrund der Gestaltung des Bewegungssensors 10 wird hierbei die Energieführungskette 31 im Wesentlichen der Bewegung des Verbrauchers nachfolgen können. Sollte eine Panne, z.B. ein verhaken der Energieführungskette 31 auftreten, kann die Steuereinheit 46 dies anhand der Endschalter 16, 17 erkennen und ggf. einen Nothalt des Verbrauchers 50 auslösen, z.B. im dem diese eine Seilwinde für das Tiefbauwerkzeug stoppt.

FIG.4A-4C zeigen auch ein antriebsseitig mit dem Trommelantrieb 48 verbundenes, selbsthemmendes Schneckengetriebe aufweist, welches abtriebsseitig die Trommelachse 44 d.h. Welle der Trommel 42 antreibt. So wird ein unkontrollierter Freilauf verhindert.

Anders als in FIG.4A-4C gezeigt, kann die Steuereinheit 46 auch beim Trommelantrieb 48, d.h. auf der stationären Seite der Energieführungskette 31 angeordnet sein.

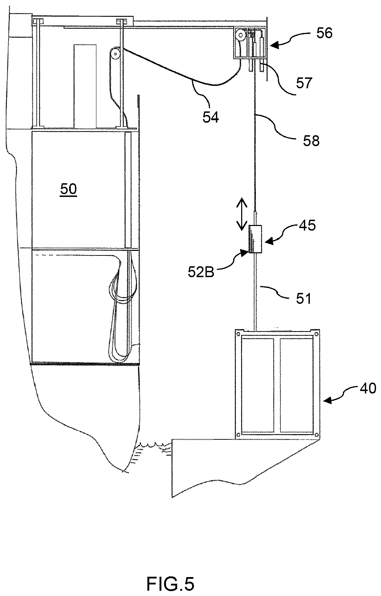

FIG.5 zeigt ein weiteres Anwendungsbeispiel der Vorrichtung 40, z.B. gemäß FIG.4A-4C, zur Stromversorgung eines hochseetauglichen Schiffs 50 als Verbraucher. Zur Landstromversorgung (Engl. Shore Power / Alternative Maritime Power) des Schiffs 50 ist die Vorrichtung 40 (hier nicht näher gezeigt) in einem Standard-Container vorgesehen, der in FIG.5 beispielhaft direkt an der Kaimauer eines Hafens aufgestellt ist. Das Schiff 50 weist einen Auslegerarm mit Seilwinde 56 auf, mit Stahlseil 58 und Kranhaken (nicht gezeigt) zum Hoch- und Runterfahren einer kombinierten Kupplungs- und Sensoreinheit 45 der Vorrichtung 40. Zum Verbinden der elektrischen Versorgungsleitungen 54 des Schiffs 50 mit den von der Energieführungskette 51 zugeführten Versorgungsleitungen (vgl. FIG.4A-4C) ist nahe der Seilwinde 56 eine Kupplungsvorrichtung 57, z.B. zur Steckverbindung, am Auslegerarm des Schiffs 50 angeordnet. Der Endbereich 52B der Energieführungskette 51 ist, wie zu FIG.4A-4C erläutert, innerhalb der Kupplungs- und Sensoreinheit 45 schwimmend gelagert und mit einem Bewegungssensor (vgl. FIG.4A-4C) wirkverbunden.

Die Wirkweise der Anordnung nach FIG.5 ist bzgl. der Kräfte entsprechend umgekehrt als zu FIG.4A-4C beschrieben, wobei auch hier der Trommelantrieb dem Antrieb der Seilwinde 56 nachläuft. Der Aufbau der Vorrichtung 40 ist auf die umgekehrten Kraftverhältnisse angepasst, ansonsten analog wie zu FIG.4A-4C beschrieben. Wird die kombinierte Kupplungs- und Sensoreinheit 45 durch die Seilwinde 56 hochgezogen, schaltet der Trommelantrieb der Vorrichtung 40 ein und fährt die Energieführungskette 51 aus, bis diese an der Kupplungsvorrichtung 57 des Schiffs 50 einrastet und mit den Versorgungsleitungen 54 verbindet. Zu diesem Zeitpunkt stoppt die Seilwinde 56, was ein Abschalten des Trommelantriebs verursacht. Das Abkoppeln, Zurückfahren und Aufwickeln der Energieführungskette 51 in den Container der Vorrichtung 40 verläuft entsprechend umgekehrt, mit automatischem Aufwickeln der Energieführungskette 51 auf die Trommel (FIG.4A-4C).

Alternativ zu dem in FIG.5 abgebildeten Anwendungsbeispiel kann die Vorrichtung 40 auch auf dem Schiff 50, insbesondere einem Containerschiff, selbst angeordnet sein, wobei die motorgestützte und sensorgesteuerte Vorrichtung 40 zum Aus- bzw. Einfahren der Energieführungskette 51 vom Schiff zur Anlegestelle eingesetzt wird, mit Wirkweise und Aufbau identisch wie zu FIG.3 oder FIG.4A-4C beschrieben.

Typische Leistungsaufnahmen zur Landstromversorgung, z.B. von Container- oder Kreuzfahrtschiffen, liegen im Bereich von einigen Megawatt (MW) bei drei Phasen. Daher haben geeignete Versorgungsleitungen ein extrem hohes Gewicht. Somit kann die motorgestützte und sensorgesteuerte Anordnung zur Leitungsführung besonders vorteilhaft zur Landstromversorgung eingesetzt werden.

### Bezugszeichenliste

FIG.1
   - 10: Bewegungssensor
   - 11: Führung
   - 12: Gleitstück
   - 13: erster Aufnehmer
   - 14: zweiter Aufnehmer
   - 15: Auslöseelement
   - 16, 17: Endschalter
   - L: Längsrichtung
FIG.2
   - 20: Bewegungssensor
   - 21: Führung
   - 22: Gleitstück
   - 23: erster Aufnehmer
   - 24: zweiter Aufnehmer
   - 25: Auslöseelemente
   - 28, 29: Endanschläge
   - L: Längsrichtung
FIG.3
   - 30: Wickelvorrichtung
   - 31: Energieführungskette
   - 32: Trommel
   - 33: Spiralband
   - 34: Trommelachse
   - 35: Sensoreinheit
   - 36: Steuereinheit
   - 38: Elektromotor
FIG.4A-4C
   - 10: Bewegungssensor
   - 40: Wickelvorrichtung
   - 42: Trommel
   - 44: Trommelachse
   - 45: Sensoreinheit
   - 46: Steuereinheit
   - 48: Elektromotor
   - 49: Schneckengetriebe
   - 50: Verbraucher
   - 51: Energieführungskette
   - 52A, 52B: Endbereiche
   - 53A, 53B: Anschlussstellen
   - 54: Versorgungsleitungen
   - 55: Signalleitungen
FIG. 5
   - 40: Wickelvorrichtung
   - 45: Sensor- und Kupplungseinheit
   - 50: Schiff (Verbraucher)
   - 51: Energieführungskette
   - 52B: Endbereiche
   - 54: Versorgungsleitungen
   - 56: Seilwinde
   - 57: Kupplungsvorrichtung
   - 58: Stahlseil

## Patentansprüche

1. Anordnung zur Leitungsführung, umfassend:
eine Energieführungskette (31; 51) zur geschützten Führung von Leitungen, Kabeln, Schläuchen oder dergleichen (54, 55) zwischen einer ersten Anschlussstelle und einer zu dieser relativbeweglichen zweiten Anschlussstelle an einem Verbraucher;
einen Antrieb (38, 48), welcher mit der Energieführungskette wirkverbunden ist, zur Unterstützung der Hin- und/oder Rückfahrbewegung der Energieführungskette;
eine Steuereinheit (36; 46) zum Ansteuern des Antriebs;
eine Sensoreinheit (35, 45) zur Erfassung einer Bewegungsgröße der Energieführungskette; wobei
die Sensoreinheit einen Bewegungssensor (10; 20) umfasst, der an einem verbraucherseitigen Endbereich (52B) der Energieführungskette angeordnet ist zur Erfassung einer Bewegungsgröße des beweglichen Endbereichs (52B), insbesondere dessen Bewegungsrichtung; und
der Bewegungssensor mit der Steuereinheit (46) verbunden ist, welche den Antrieb (38, 48) entsprechend der vom Bewegungssensor (10; 20) erfassten Bewegungsgröße ansteuert zur Unterstützung der Hin- und/oder Rückfahrbewegung der Energieführungskette.

2. Anordnung nach Anspruch 1, **dadurch gekennzeichnet, dass**
der Bewegungssensor (10; 20) ein Lager mit einem ersten Bauteil und mit einem dazu relativbeweglichen zweiten Bauteil aufweist und mindestens einen Aufnehmer (13, 14; 23, 24) umfasst, dessen Ausgangssignal von der Position des zweiten Bauteils in Bezug auf das erste Bauteil abhängt;
wobei der Bewegungssensor (10; 20) insbesondere ein Linearlager aufweist, mit einer Führung (11; 21), einem in der Führung in Längsrichtung (L) verschiebbaren Gleitstück (12; 22), und mindestens einen Aufnehmer (13, 14; 23, 24) umfasst, dessen Ausgangssignal von der Position des Gleitstücks relativ zur Führung abhängt; und dass
der Bewegungssensor (10; 20) mit dem ersten Bauteil, insbesondere mit der Führung, am Verbraucher und mit dem zweiten Bauteil, insbesondere mit dem Gleitstück, am entsprechenden beweglichen Endbereich (52B), oder umgekehrt, angeordnet ist.

3. Anordnung nach Anspruch 2, **dadurch gekennzeichnet, dass** der mindestens eine Aufnehmer (13, 14; 23, 24) am Gleitstück oder an der Führung angebracht ist, wobei vorzugsweise zwei Aufnehmer, insbesondere ein erster und ein zweiter berührungsfreier Näherungsschalter (13, 14; 23, 24) mit einem Abstand in Längsrichtung, vorgesehen sind.

4. Anordnung nach Anspruch 2 oder 3, **dadurch gekennzeichnet, dass** der Bewegungssensor (10) zusätzlich zwei Endschalter (16, 17) an gegenüberliegenden Enden der Führung bzw. des Gleitstücks aufweist, um das Erreichen einer maximalen Längsverschiebung anzuzeigen.

5. Anordnung nach einem der Ansprüche 1 bis 4, **dadurch gekennzeichnet**, die Steuereinheit eine Regelung mit Rückkopplung bildet, umfassend den Antrieb (38, 48) als Stellglied, welches von der Steuereinheit angesteuert wird, und den Bewegungssensor (10) als Messglied.

6. Anordnung nach einem der Ansprüche 1 bis 4, **dadurch gekennzeichnet, dass** Signalleitungen (55) zum Verbinden des Bewegungssensors (10) mit der Steuereinheit (46) durch die Energieführungskette zum feststehenden Ende dieser geführt sind.

7. Anordnung nach einem der Ansprüche 1 bis 6, **dadurch gekennzeichnet, dass** die Steuereinheit (36; 46) einen Nothalt des beweglichen Verbrauchers auslöst, wenn der Bewegungssensor das Erreichen einer maximalen Längsverschiebung anzeigt.

8. Anordnung nach einem der Ansprüche 1 bis 6, **dadurch gekennzeichnet, dass** der Bewegungssensor (10) die zweite Anschlussstelle mit dem beweglichen Endbereich (52B) mechanisch koppelt und hierzu insbesondere an der Führung bzw. am Gleitstück zwei Endanschläge (28, 29) aufweist zur Begrenzung der maximalen Längsverschiebung.

9. Anordnung zur Leitungsführung nach einem der Ansprüche 1 bis 8, wobei die Hin- und/oder Rückfahrbewegung der Energieführungskette (31) im Wesentlichen in horizontaler Richtung erfolgt, die Energieführungskette ein Untertrum, einen Umlenkbogen und ein Obertrum bildet und der Antrieb die Fahrbewegung des Obertrums und/oder des Umlenkbogens unterstützt.

10. Vorrichtung (30; 40) zum Auf- und Abwickeln einer Leitungsführungseinrichtung, insbesondere einer Energieführungskette, umfassend
eine Leitungsführungseinrichtung (31; 51) zur geschützten Führung von Leitungen, Kabeln, Schläuchen oder dergleichen zwischen einer ersten Anschlussstelle (53A) und einer zu dieser relativbeweglichen zweiten Anschlussstelle (53B) an einem Verbraucher;
eine drehbar gelagerte Trommel (32; 42) zum Auf- und Abwickeln der Leitungsführungseinrichtung;
einen Trommelantrieb (38; 48) zum Drehen der Trommel;
**gekennzeichnet durch**,
eine am verbraucherseitigen Endbereich (52B) der Leitungsführungseinrichtung angeordnete Sensoreinheit (35; 45) zur Erfassung einer Bewegungsgröße der Leitungsführungseinrichtung;
eine mit der Sensoreinheit (35; 45) und dem Trommelantrieb verbundene Steuereinheit (36; 46) zum Ansteuern des Trommelantriebs entsprechend der erfassten Bewegungsgröße, insbesondere der Bewegungsrichtung des verbraucherseitigen Endbereichs (52B).

11. Vorrichtung nach Anspruch 10, **dadurch gekennzeichnet, dass** die Sensoreinheit (35; 45) einen Bewegungssensor (10; 20) umfasst, mit einer Führung, einem in der Führung in Längsrichtung (L) verschiebbaren Gleitstück und mindestens einem Aufnehmer, dessen Ausgangssignal von der Position des Gleitstücks relativ zur Führung abhängt.

12. Vorrichtung nach Anspruch 10 oder 11, **dadurch gekennzeichnet, dass** die Steuereinheit (36; 46) den Trommelantrieb (38; 48) in Bezug auf Drehrichtung und Drehzahl ansteuert, insbesondere regelt oder steuert.

13. Vorrichtung nach Anspruch 10, 11 oder 12, **dadurch gekennzeichnet, dass** der Trommelantrieb einen Elektromotor (48) und ein damit antriebsseitig verbundenes selbsthemmendes Getriebe (49) aufweist, welches abtriebsseitig mit der Trommelachse verbunden ist, wobei das Getriebe vorzugsweise ein Schneckengetriebe (49) ist.

14. Verwendung der Vorrichtung nach einem der Ansprüche 10 bis 13 zur Landstromversorgung eines Schiffs, insbesondere eines Hochseeschiffs, wobei die Leitungsführungseinrichtung vorzugsweise eine Energieführungskette (51) umfasst, welche Starkstromkabel zur Landstromversorgung führt.

15. Verwendung der Vorrichtung nach einem der Ansprüche 10 bis 13 zur Versorgung eines vertikal verfahrbaren Tiefbauwerkzeugs, wie beispielsweise eines Tiefbohrkopfes oder dergleichen, wobei das die zweite Anschlussstelle aufweisende Tiefbauwerkzeug von einem Zugseil einer Winde getragen ist und mittels eines Windenantriebs überwiegend vertikal auf- bzw. abfährt, und der Trommelantrieb dem Windenantrieb nachläuft.

## Claims

1. An arrangement for line guidance including:
an energy guide chain (31; 51) for the protected guidance of lines, cable, hoses or the like (54, 55) between a first connecting location and a second connecting location moveable relative thereto at a consumer;
a drive (38, 48) operatively connected to the energy guide chain for assisting with the forward and/or return movement of the energy guide chain;
a control unit (36; 46) for actuating the drive;
a sensor unit (35, 45) for detecting a movement parameter of a moveable end region (52B) of the energy guide chain, wherein
the sensor unit includes a movement sensor (10; 20) arranged at a consumer-side end region (52B) of the energy guide chain for detecting a movement parameter of the moveable end region (52B), in particular its direction of movement; and
the movement sensor is connected to the control unit (46) which controls the drive (38, 48) according to the movement parameter detected by the movement sensor (10; 20) for supporting the forward and/or return movement of the energy guide chain.

2. An arrangement according to claim 1 **characterised in that**
the movement sensor (10; 20) has a bearing having a first component and a second component moveable relative thereto, and includes at least one pick-up (13, 14; 23, 24) whose output signal depends on the position of the second component in relation to the first component;
wherein the movement sensor (10; 20) has in particular a linear bearing, having a guide (11; 21), a slider (12; 22) displaceable in the guide in the longitudinal direction (L), and includes at least one pick-up (13, 14; 23, 24) whose output signal depends on the position of the slider relative to the guide; and **in that**
the movement sensor (10; 20) is arranged with the first component, in particular with the guide, at the consumer and with the second component, in particular with the slider, at the corresponding moveable end region (52B), or vice versa.

3. An arrangement according to claim 2 **characterised in that** the at least one pick-up (13, 14; 23, 24) is mounted to the slider or to the guide, wherein preferably there are provided two pick-ups, in particular a first and a second contact-free proximity switch (13, 14; 23, 24) at a spacing in the longitudinal direction.

4. An arrangement according to claim 2 or 3 **characterised in that** the movement sensor (10) additionally has two limit switches (16, 17) at mutually opposite ends of the guide or slider to indicate the attainment of a maximum longitudinal displacement.

5. An arrangement according to one of claims 1 to 4 **characterised in that** the control unit forms a closed-loop control including the drive (38, 48) as an adjusting member which is controlled by the control unit, and the movement sensor (10) as a measuring element.

6. An arrangement according to one of claims 1 to 4 **characterised in that** signal lines (55) for connecting the movement sensor (10) to the control unit (46) are guided through the energy guide chain to the stationary end thereof.

7. An arrangement according to one of claims 1 to 6 **characterised in that** the control unit (36; 46) triggers an emergency stop of the moveable consumer when the movement sensor indicates that a maximum longitudinal displacement has been reached.

8. An arrangement according to one of claims 1 to 6 **characterised in that** the movement sensor (10) mechanically couples the second connecting location to the moveable end region (52B) and for that purpose has in particular at the guide or at the slider two end abutments (28, 29) for limiting the maximum longitudinal displacement.

9. An arrangement for guiding cables according to one of claims 1 to 8 wherein the forward and/or return movement of the energy guide chain (31) is effected substantially in a horizontal direction, the energy guide chain forms a lower run, and direction-changing arc and an upper run and the drive assists with the travel movement of the upper run and/or the direction-changing arc.

10. Apparatus (30; 40) for winding up and unwinding a line guide device, in particular an energy guide chain, including
a line guide device (31; 51) for the protected guidance of lines, cables, hoses or the like between a first connecting location (53A) and a second connecting location (53B) moveable relative thereto at a consumer;
a rotatably mounted drum (32; 42) for winding up and unwinding the line guide device; and
a drum drive (38; 48) for rotating the drum,
**characterised by**
a sensor unit (35; 45) arranged at the consumer-side end region (52B) of the line guide device for detecting a movement parameter of the line guide device; and
a control unit (36; 46) connected to the sensor unit (35; 45) and the drum drive for actuating the drum drive according to the detected movement parameter, in particular the direction of movement of the consumer-side end region (52B).

11. Apparatus according to claim 10 **characterised in that** the sensor unit (35; 45) includes a movement sensor (10; 20) having a guide, a slider displaceable in the guide in the longitudinal direction (L) and at least one pick-up whose output signal depends on the position of the slider relative to the guide.

12. Apparatus according to claim 10 or claim 11 **characterised in that** the control unit (36; 46) actuates the drum drive (38; 48) in regard to the direction of rotation and the rotational speed, in particular providing for closed-loop or open-loop control thereof.

13. Apparatus according to claim 10, claim 11 or claim 12 **characterised in that** the drum drive has an electric motor (48) and a self-locking transmission (49) which is connected thereto at the drive side and which is connected at the output side to the drum shaft, wherein the transmission is preferably a worm transmission (49).

14. Use of the apparatus according to one of claims 10 to 13 for the shore power supply of a ship, in particular a deep-sea ship, wherein the line guide device preferably includes an energy guide chain (51) which guides heavy-current cables for the shore power supply.

15. Use of the apparatus according to one of claims 10 to 13 for the supply of a vertically displaceable underground works tool like for example a deep drilling head or the like, wherein the underground works tool having the second connecting location is carried by a draw cable of a winch and moves predominantly vertically up and down by means of a winch drive and the drum drive follows the winch drive.

## Revendications

1. Dispositif de guidage de lignes, comprenant:
une chaîne de guidage d'énergie (31; 51) pour le guidage protégé de lignes, de câbles, de tuyaux ou similaires (54, 55) entre un premier point de raccordement et un deuxième point de raccordement qui est mobile par rapport au premier point de raccordement sur un consommateur;
un dispositif d'entraînement (38, 48) qui est relié fonctionnellement à la chaîne de guidage d'énergie pour supporter le mouvement de va-et/ou-vient de la chaîne de guidage d'énergie;
une unité de commande (36; 46) pour commander le dispositif d'entraînement;
une unité de détection (35; 45) pour détecter une quantité de mouvement de la chaîne de guidage d'énergie;
dans lequel
l'unité de détection comprend un capteur de mouvement (10; 20) disposé au niveau d'une partie d'extrémité mobile (52B) côté consommateur de la chaîne de guidage d'énergie pour détecter une quantité de mouvement de la partie d'extrémité mobile (52B), en particulier sa direction de mouvement; et
le capteur de mouvement est relié à l'unité de commande (46) qui commande le dispositif d'entraînement (38, 48) en fonction de la quantité de mouvement détectée par le capteur de mouvement (10; 20) pour assister le mouvement de va-et/ou-vient de la chaîne de guidage d'énergie.

2. Dispositif selon la revendication 1, **caractérisé en ce que** le capteur de mouvement (10; 20) présente un palier avec un premier composant et avec un deuxième composant mobile par rapport à celui-ci, et comprend au moins un capteur (13, 14; 23, 24) dont le signal de sortie dépend de la position du deuxième composant par rapport au premier composant;
dans lequel le capteur de mouvement (10; 20) présente notamment un palier linéaire, avec un dispositif de guidage (11; 21), une pièce coulissante (12; 22) qui peut être déplacée dans la direction longitudinale (L) dans le dispositif de guidage et comprend au moins un capteur (13, 14; 23, 24) dont le signal de sortie dépend de la position de la pièce coulissante par rapport au dispositif de guidage et dans lequel le capteur de mouvement (10; 20) est disposé avec le premier composant, en particulier avec le dispositif de guidage, au niveau du consommateur et avec le deuxième composant, en particulier avec la pièce coulissante, au niveau de la partie d'extrémité mobile correspondante (52B), ou vice versa.

3. Dispositif selon la revendication 2, **caractérisé en ce que** l'au moins un capteur (13, 14; 23, 24) est monté sur la pièce coulissante ou sur le dispositif de guidage, deux capteurs étant de préférence prévus, en particulier un premier et un deuxième détecteur de proximité sans contact (13, 14; 23, 24) avec une distance dans la direction longitudinale.

4. Dispositif selon la revendication 2 ou 3, **caractérisé en ce que** le capteur de mouvement (10) comprend en outre deux interrupteurs de fin de course (16, 17) aux extrémités opposées du dispositif de guidage ou de la pièce coulissante, respectivement, pour indiquer l'atteinte d'un déplacement longitudinal maximal.

5. Dispositif selon l'une quelconque des revendications 1 à 4, **caractérisé en ce que** l'unité de commande forme un système de commande à rétroaction en boucle fermée comprenant le dispositif d'entraînement (38, 48) comme actionneur commandé par l'unité de commande, et comprenant le capteur de mouvement (10) comme élément de mesure.

6. Dispositif selon l'une quelconque des revendications 1 à 4, **caractérisé en ce que** les lignes de signaux (55) pour la connexion du capteur de mouvement (10) à l'unité de commande (46) sont guidées à travers la chaîne de guidage d'énergie jusqu'à l'extrémité fixe de celle-ci.

7. Dispositif selon l'une quelconque des revendications 1 à 6, **caractérisé en ce que** l'unité de commande (36; 46) déclenche un arrêt d'urgence du consommateur mobile lorsque le capteur de mouvement indique qu'un déplacement longitudinal maximal a été atteint.

8. Dispositif selon l'une quelconque des revendications 1 à 6, **caractérisé en ce que** le capteur de mouvement (10) couple mécaniquement le deuxième point de raccordement à la partie d'extrémité mobile (52B) et présente à cet effet deux butées de fin de course (28, 29), notamment sur le dispositif de guidage ou sur la pièce coulissante, pour limiter le déplacement longitudinal maximal.

9. Dispositif de guidage de lignes selon l'une quelconque des revendications 1 à 8, dans lequel le mouvement de va-et/ou-vient de la chaîne de guidage d'énergie (31) s'effectue sensiblement dans la direction horizontale, la chaîne de guidage d'énergie forme un brin inférieur, un coude de déviation et un brin supérieur, et le dispositif d'entraînement assiste le mouvement de déplacement du brin supérieur et/ou du coude de déviation.

10. Dispositif (30; 40) d'enroulement et de déroulement d'un dispositif de guidage de lignes, en particulier une chaîne de guidage d'énergie, comprenant
un dispositif de guidage de lignes (31; 51) pour le guidage protégé de lignes, de câbles, de tuyaux ou similaires entre un premier point de raccordement (53A) et un deuxième point de raccordement (53B) qui est mobile par rapport au premier point de raccordement, sur un consommateur;
un tambour (32; 42) monté de manière rotative pour enrouler et dérouler le dispositif de guidage de ligne; un dispositif d'entraînement de tambour (38; 48) pour faire tourner le tambour;
**caractérisé par**
une unité de détection (35; 45) disposée au niveau de la partie d'extrémité côté consommateur (52B) du moyen de guidage de ligne pour détecter une quantité de mouvement du dispositif de guidage de lignes;
une unité de commande (36; 46) reliée à l'unité de capteur (35; 45) et au dispositif d'entraînement de tambour pour commander le dispositif d'entraînement de tambour selon la quantité de mouvement détectée, en particulier la direction de mouvement de la partie d'extrémité côté consommateur (52B).

11. Dispositif selon la revendication 10, **caractérisé en ce que** l'unité de capteur (35; 45) comprend un capteur de mouvement (10; 20) avec un dispositif de guidage, une pièce coulissante déplaçable dans le dispositif de guidage dans la direction longitudinale (L) et au moins un capteur dont le signal de sortie dépend de la position de la pièce coulissante par rapport au dispositif de guidage.

12. Dispositif selon la revendication 10 ou 11, **caractérisé en ce que** l'unité de commande (36; 46) commande, en particulier régule ou commande, le dispositif d'entraînement de tambour (38; 48) en ce qui concerne le sens de rotation et la vitesse de rotation.

13. Dispositif selon la revendication 10, 11 ou 12, **caractérisé en ce que** le dispositif d'entraînement de tambour comprend un moteur électrique (48) et un engrenage autobloquant (49) relié à celui-ci du côté de l'entraînement, lequel engrenage étant relié à l'axe du tambour du côté de la sortie, l'engrenage étant de préférence un engrenage à vis sans fin (49).

14. Utilisation du dispositif selon l'une quelconque des revendications 10 à 13 pour alimenter en énergie terrestre un navire, notamment un navire océanique, dans laquelle le dispositif de guidage de lignes comprend de préférence une chaîne de guidage d'énergie (51) qui guide les câbles d'énergie vers l'alimentation en énergie terrestre.

15. Utilisation du dispositif selon l'une quelconque des revendications 10 à 13 pour l'alimentation d'un outil de génie civil mobile verticalement, tel qu'une tête de forage profond ou analogue, l'outil de génie civil comportant le deuxième point de connexion et étant porté par un câble de traction d'un treuil et se déplaçant vers le haut ou vers le bas essentiellement verticalement au moyen d'un entraînement par treuil, et l'entraînement par tambour suivant l'entraînement par treuil.
